(19) **Europäisches Patentamt European Patent Office Office européen des brevets**

(11) **EP 3 232 088 B1**

(12) **EUROPEAN PATENT SPECIFICATION**

(45) Date of publication and mention
of the grant of the patent:
**04.03.2020 Bulletin 2020/10**

(21) Application number: **15888620.0**

(22) Date of filing: **01.09.2015**

(51) Int Cl.:
***F16H 47/06*** *(2006.01)*  ***B60K 17/10*** *(2006.01)*

(86) International application number:
**PCT/RU2015/000552**

(87) International publication number:
**WO 2016/163913 (13.10.2016 Gazette 2016/41)**

(54) **HYDROMECHANICAL AUTOMATIC GEARBOX AND THE VEHICLE USING THE SAME**

HYDROMECHANISCHES AUTOMATIKGETRIEBE UND FAHRZEUG DAMIT

BOÎTE DE VITESSES HYDROMÉCANIQUE AUTOMATIQUE ET VÉHICULE COMPRENANT CETTE BOÎTE DE VITESSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2015 RU 2015112829**

(43) Date of publication of application:
**18.10.2017 Bulletin 2017/42**

(73) Proprietor: **Dumov, Viktor Izrailevich**
**Moscow 129090 (RU)**

(72) Inventors:
• **SHAKIROVA, Olga Vladimirovna**
**Moscow 123104 (RU)**

• **SHAKIROV, Grigoriy Rafovich**
**Moscow 123104 (RU)**

(74) Representative: **Lapienis, Juozas**
**MSP Europe UAB**
**21-92 Seimyniskiu Str.**
**09236 Vilnius (LT)**

(56) References cited:
**BY-C1- 14 822**     **RU-C1- 2 031 808**
**SU-A1- 903 636**     **US-A- 2 995 955**
**US-A- 3 944 034**     **US-A- 5 315 901**
**US-A- 5 394 694**     **US-A1- 2007 169 583**

**Description**

The field of the invention

The group of inventions relates to hydromechanical automatic gearboxes (AGB) configured to be used in vehicles for various application (both on land and water) and to vehicles using such hydromechanical AGB.

The background of the invention

Currently hydromechanical AGB with a great number of gears (5-8 for top class motor cars, 12-14 for trucks, buses etc.) are used in modern vehicles. Such AGB provide comfort driving and low fuel consumption in a wide speed range of vehicles (Cf. В.В. Осепчугов, А.К.ФруМкиН «АВТОМОбиль. АНализ кОНСТрукций, элеМеНТы расчеТа», - М.: publ. МашиНОСТрОеНие, 1989,p. 89).

Hydromechanical AGB for vehicles, comprising gearing, a gear reducer and a hydraulic torque converter having centrifugal wheels of a pump and a turbine and a reactor connected to a pressure fluid container via a pressure fluid feeding pump, are well known. The vehicle, comprising such type of gearbox, an electro-hydraulic gear shift unit and a pressure fluid feeding pump connected to the pressure fluid container, is also known. The torque transmission from the engine shaft to vehicle movers (in this case wheels) is performed in different drive modes when starting, moving forward and back at low speed due to the hydraulic torque converter. When driving at high speed the unit disables the hydraulic torque converter and the torque transmission from engine shaft to vehicle movers is performed with the use of many epicyclical gears and gear drives activated and deactivated automatically in a given sequence by friction clutches and friction brake bands (Cf. В.В. Осепчугов, А.К.ФруМкиН «АВТОМОбиль. АНализ кОНСТрукций, элеМеНТыl расчеТа», - М.: publ. МашиНОСТрОеНие, 1989, p. 87, fig. 63).

The known hydromechanical AGB are rather complex and labor-intensive due to the presence of many high-precision parts and units; they are also limited in operation life that, in turn, reduces their reliability and vehicle safety.

A hydromechanical automatic gearbox is known, comprising an input shaft extending from an engine and gearing extending from the input shaft to each gear step being a central gear, located on the input shaft, meshing with gear wheels of different gear steps, each of the gear wheels is mounted on the input shaft of at least one hydraulic torque converter with centrifugal wheels of a pump and a turbine forming a flow path of pressure fluid, connected to a pressure fluid container through a feeding pump, which feeds pressure fluid, as well as with reactor blades located in the flow path of pressure fluid. Each of the hydraulic torque converters is electronically and hydraulically linked to the gear shift unit of the vehicle (US Patent No. 5394694, 1995).

This gearbox has improved structural and hydrodynamic characteristics. The hydraulic torque converters used in it withstand operation at high speed of rotation of the impeller.

However, despite the stated characteristics, this gearbox does not have a sufficiently high efficiency. Performing specific angles at the output of the working wheels of the pump and the turbine of the hydraulic torque converter, as is done in the known construction, is not a sufficient measure to increase the efficiency of the hydraulic torque converter, since not only output characteristics, but also input characteristics influence hydromechanical losses.

The operation of each hydraulic torque converter corresponds to a specific power transfer ratio. At a given gear, the operation of the hydraulic torque converter corresponding thereto is activated, while other hydraulic torque converters are automatically switched off. In the known gearbox, the dropping of idle hydraulic torque converters is carried out using a jet pump, which has low efficiency, which causes the presence of engine power losses for its operation. The reactor blades always remain in the same position.

Besides, the dimensions of this gearbox remain significant, which enables to use it only in the conventional way, as a single gearbox for the operation of all vehicle movers (wheels, screws, tracks, etc.).

The known gearboxes having significant dimensions do not allow any other variants of interaction with movers, which results in significantly reduced vehicle maneuverability and road stability of the vehicle.

*Disclosure:*

The problem that the inventions as claimed are to solve is aimed at increasing the efficiency of the hydromechanical automatic gearbox of the vehicle by reducing engine power losses as well as improving maneuverability and increasing stability of the vehicle by improving the construction and reducing dimensions of the hydromechanical automatic gearbox.

The technical result is achieved due to the fact that in the hydromechanical automatic gearbox comprising an input shaft extending from the engine and gearings extending from the input shaft to each gear step the gearings are made in the form of a central gear wheel located on the input shaft and engaged with different step gear wheels; wherein each gear wheel is installed on the input shaft of at least one hydraulic torque converter with centrifugal wheels of a pump and a turbine located accordingly on its input and output shafts and providing pressure fluid circulation, as well as reactor blades located in the flow path, wherein step-down gears connected to a gear reducer, which is common for all hydraulic torque converters mounted on the gearbox output shaft, are located on the output shafts of the hydraulic torque converters, and wherein each hydraulic torque converter is electronically and hydraulically linked to the gear shift unit of the vehicle, wherein the transmission ratio between the central gear and the top gear corresponds to the following ratio:

$$n_P^{max}/n_{En}^{max} \geq 0.62 \sqrt[8]{N_{En}^{max}},$$

where

$$n_P^{max} - \text{maximum}$$

rotational speed of the hydraulic torque converter input shaft working at the gear step;

$$n_{En}^{max} - \text{maximum}$$

rotational speed of the engine shaft,

$$N_{En}^{max} - \text{maximum}$$

engine capacity (in kilowatts),wherein a pump centrifugal wheel has profile blades with centerline turning at 122°-135° provided that the ratio of the value of the centrifugal wheel outer diameter $D_{2P}$ of the pump to the value of the inlet diameter $D_{1P}$ of its profile blades is: $D_{2P}/D_{1P}$=1.4-1.9; and the turbine centrifugal wheel has profile blades with centerline turning at 110°-120° provided that the ratio of the value of the centrifugal wheel outer diameter $D_{2T}$ of pump to the value of the inlet diameter $D_{1T}$ of its profile blades is: $D_{2T}/D_{1T}$=1.1-1.3;wherein the turbine centrifugal wheel is made with a bladeless conduit formed by centrifugal wheel discs of the turbine in front of its profile blades and having a diameter extension equal to the ratio: $D_{1T}/D_{2P}$=1.15-1.4 where $D_{1T}$ is the inlet diameter of the profile blades of the turbine centrifugal wheel and $D_{2P}$ is the outer diameter of the pump centrifugal wheel; reactor variable blades are configured to be fixed in a completely open, partially open or completely closed position.

The technical result is also achieved due to the fact that the vehicle, which has an engine, movers, a feeding pump, which feeds pressure fluid from a pressure fluid container, and a unit for automatic gear shift from the engine to the movers connected to the feeding pump, which feeds pressure fluid, comprises several identical hydromechanical automatic gearboxes designed as shown here above; each of which is connected by its output shaft to the mover corresponding thereto, wherein the vehicle is equipped with an air exhaust pump connected with air cavity in the pressure fluid container, wherein the flow path of pressure fluid of hydraulic torque converter in each gearbox is connected to the air cavity of the pressure fluid container.

The suggested construction allows creating a new design map of the automatic gearbox and torque transmission from vehicle engine to movers (wheels, propellers etc.), which takes into account the dependence of the geometry of the flow-through part of the hydraulic torque converter on the engine power, and also maximally takes into account all the particularities of the flow in the hydraulic torque converter, which can significantly increase the efficiency (about 10%) of the gearbox, as well as significantly reduce dimensions thereof, that allows designing vehicles of new generations with higher reliability, maneuverability and road stability.

Hydraulic torque converters in the AGB are located in a circumferential banding around the central gear wheel being engaged with gear wheels of smaller diameter and different reduction rate, each of which is attached to the input shaft of the hydraulic torque converter. The ratio of the hydraulic torque converter input shaft maximum speed working at the top gear

$$n_P^{max}$$

and the maximum engine speed

$$N_{Bn}^{max}$$

equals or exceeds

$$n_P^{max}/n_{Bn}^{max} \geq 0.62 \sqrt[3]{N_{Bn}^{max}},$$

wherein

$$N_{Bn}^{max}$$

is the maximum engine capacity (in kilowatts), which allows for increasing the rotation speed of the hydraulic torque converters input shafts that also provides optimally small volumes of the pressure fluid circulating circles internal cavities thus reducing the time of their being filled with fluid (about 0.3-0.4 seconds) when activating the hydraulic torque converters. Such an aspect allows for producing AGB with small diametric dimensions.

The abovementioned aspects of the pump and turbine wheels taking into account not only the input angles of the flow, but also the movement of the flow through the pump and turbine wheels with the alignment of the flow after the pump wheel before it enters the turbine wheel, provide higher efficiency of the hydraulic torque converter, reaching about 92-93% at the transmission ratio of turbine speed $n_T$ and pump speed $n_P$ equal to $n_T/n_P$=0.95-1.0.

Smaller dimensions of AGB allow for using several identical gearboxes in a vehicle. Depending on the amount of movers, the required torque power at the wheel is decreased, which allows, in varying degrees, to further reduce the size of the gearbox. Each of the gearboxes can be installed on its mover, while the speed control of each of the movers is carried out separately from the other movers.

It is also possible to control one gearbox with several movers placed on the same side of the vehicle. Accordingly, the movers placed on the other side of the vehicle will be driven by another gearbox. This allows the vehicle to acquire the greatest maneuverability, which is especially important when the vehicle turns in confined spaces (for example, taking the ships out of the dock), and also provides control of vehicles without using the steering wheel. The vehicles are controlled by automation, which makes their movement along a given route more simple and reliable.

The presence of a pump for pumping air into the environment, communicated with the air cavity of the pressure fluid container, allows vacuum to be created in this air cavity. At the same time, the connection of the circulation circles of the pressure fluid of each hydraulic torque converter with this air cavity allows the easiest way to drain idle hydraulic torque converters without using any additional devices, such as a jet pump, which reduces hydrodynamic losses.

Brief description of the drawings

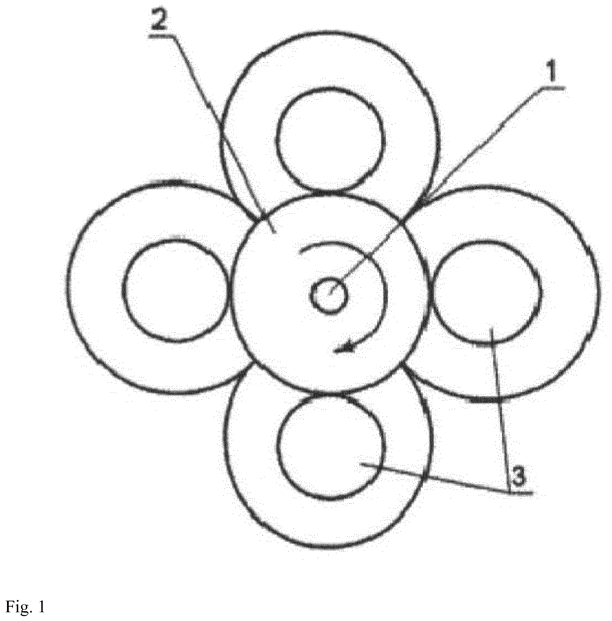

Fig. 1 is a general arrangement of gear steps in AGB.

Fig. 2 is a general arrangement of AGB according to the invention.

Fig. 3 is a general arrangement of AGB with additional gear steps according to the invention.

Fig. 4 is an enlarged view of the area A in Fig. 2.

Fig. 5 is a scheme of curvature of the profile blades in the centrifugal wheel of the hydraulic torque converter pump.

Fig. 6 is a scheme of curvature of the profile blades in the centrifugal wheel of the hydraulic torque converter turbine.

Fig. 7 is a control scheme for movers of the vehicle with several AGB (2 AGB connected with movers at one side of the vehicle).

Fig. 8 is a control scheme for movers of the vehicle with several AGB (4 AGB, each of which is connected to one mover).

The AGB comprises a central gear 2 located on an engine shaft 1, and shifting gear wheels 3 having different diameters depending on the needed value of increasing the rotational speed mounted around the central gear and meshing therewith. Each of the gear wheels 3 provides shifting to at least one gear step. Gear wheels 3 are located on input shafts 4 of hydraulic torque converters 5. The ratio between the value

$$n_P^{max}$$

of a maximum rotational speed of the hydraulic torque converter input shaft working at the gear step and the value of a maximum rotational speed of the engine shaft equals or exceeds the following ratio:

$$n_P^{max}/n_{Bn}^{max} \geq 0.62 \sqrt[3]{N_{Bn}^{max}},$$

wherein

$$N_{Bn}^{max}$$

is a maximum engine capacity (in kilowatts).

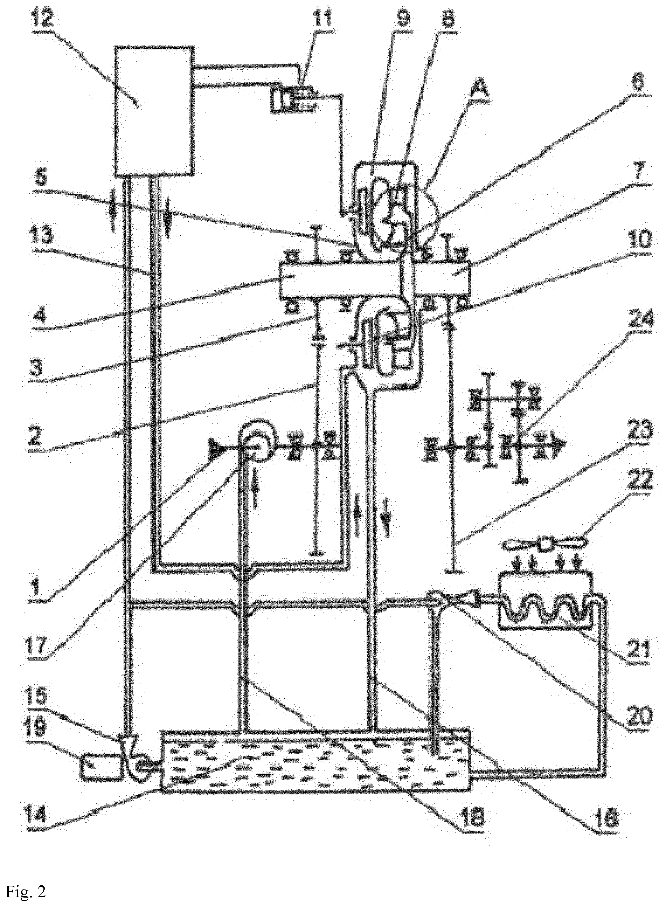

Each hydraulic torque converter 5 (cf. Fig. 2) comprises a pump centrifugal wheel 6 mounted on the shaft 4 and a turbine centrifugal wheel 8 mounted on an output shaft 7 thereof which form a pressure fluid flow path 9. In the flow path 9 variable reactor blades 10 and a unit 11 for rotating thereof in predefined position are mounted. An electro-hydraulic gear shift unit 12 controls pressure fluid feeding in the flow path 9 via a channel 13. The pressure fluid is fed from a pressure fluid container 14 positioned at the vehicle by pressure fluid feeding pump 15. The draining of pressure fluid from flow paths 9 to the container 14 is performed via a channel 16. The vehicle also comprises an air exhaust pump 17 connected to the engine shaft 1 and via a channel 18 connected to the air cavity of the container 14 with the help of an intake pipe thereof. The pressure fluid feeding pump 15 is activated by the engine shaft 1 or by an additional electric motor 19. An ejector pump 20 providing pumping the pressure fluid via an air-to-water heat exchanger 21 is used for cooling the pressure fluid. In the air-to-water heat exchanger, the cooling of the pressure fluid is provided by air flow from an electric blower 22 and by incident flow during vehicle movement.

Via gearing 23 reducing rotational speed the turbine wheel 8 is connected to gear reducer 24 unified for all hydraulic torque converters 5 which is located on the AGB output shaft and has mainly 3 or 4 flows.

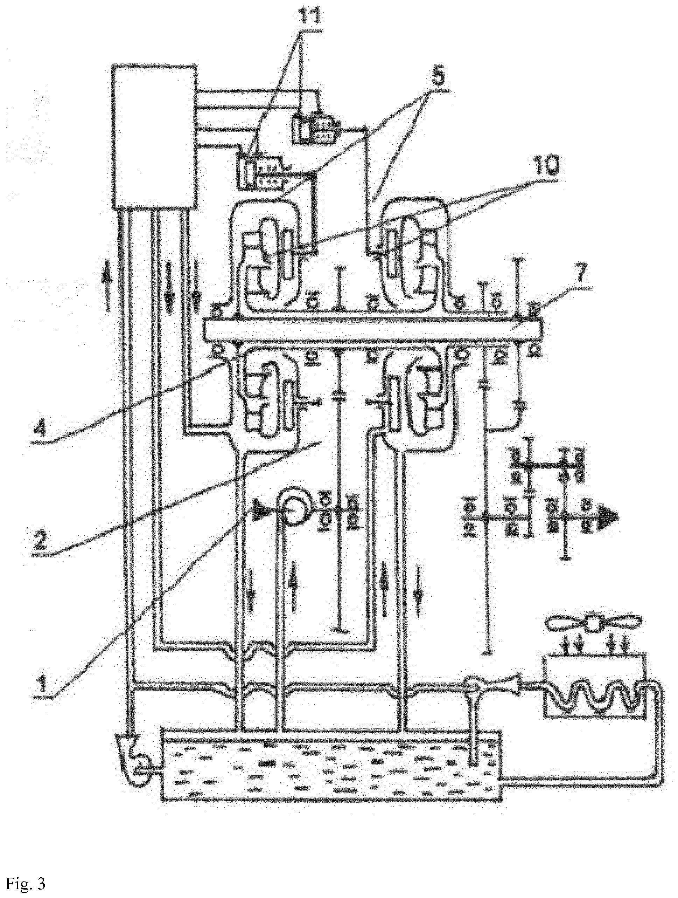

For providing AGB with increased number of gears on the single shaft 4 pump wheels 7 of two hydraulic torque converters are mounted (cf. Fig. 3). These two hydraulic torque converters allow performing modes of 4 power transmission steps.

The preferred embodiment of the invention

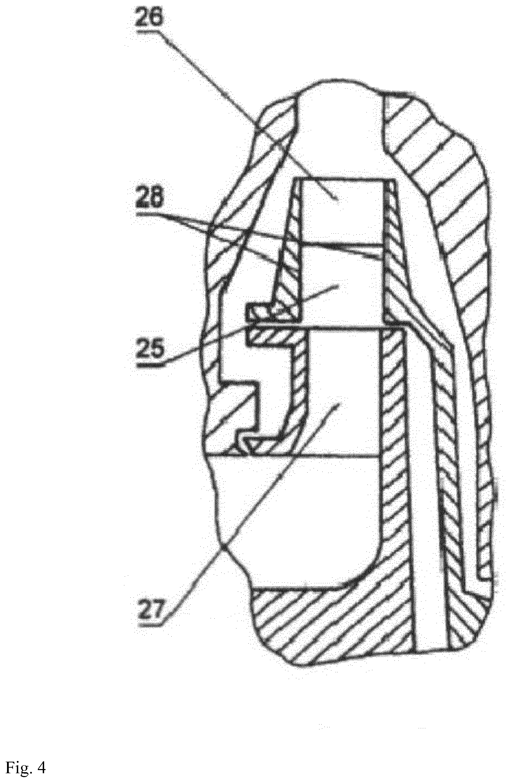

A bladeless conduit 25 having a diameter extension $D_{1T}/D_{2P}$=1.15-1.4, wherein $D_{1T}$ is an inlet diameter of profile blades 26 of the turbine wheel 8, and $D_{2P}$ is an inlet diameter of profile blades 27 of the pump wheel 6 is formed in the hydraulic torque converters 5 between the blades of the pump wheel 6 and the blades of the turbine wheel 8. The conduit 25 is a bladeless slot diffusor having side limiting walls 28 rotating during operation of the hydraulic torque converter and being part of turbine wheel disks (Fig. 4). According to the law of circulation constancy, an effective decrease of flow rate circumferential components occurs in such bladeless slot diffusor causing increase of pressure in front of the turbine blades 26 and decrease of shock losses on the leading edge thereof.

The pump centrifugal wheel 6 of the hydraulic torque converter 5 is provided with the profile blades 27 having a centerline curved at the angle

$$\varphi_P^\circ = 180^\circ + \Delta_P^\circ - (\beta_{1P}^\circ + \beta_{2P}^\circ) =$$

$122^\circ - 135^\circ$, wherein

$$\Delta_P^\circ$$

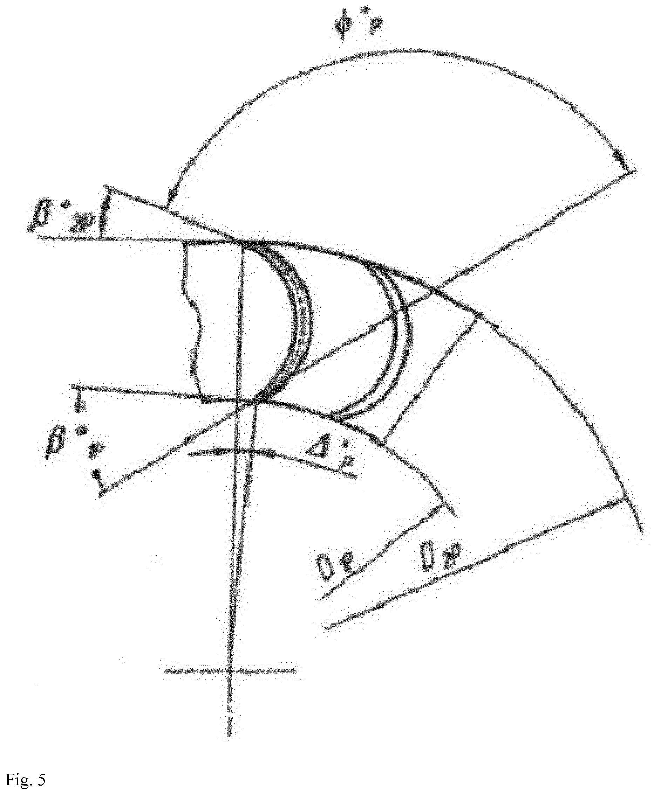

is a radial angle between the leading and trailing edges of the pump wheel blades,

$$\beta_{1P}^\circ$$

is an angle of positioning of the profile centerline at the inlet diameter of the pump wheel, and

$$\beta_{2P}^\circ$$

is an angle of positioning of the profile centerline at the output diameter of the pump wheel. Whereas, the ratio between the outer diameter of the wheel and the inlet diameter of the blades is equal to: $D_{2P}/D_{1P} = 1.4\text{-}1.9$ (Fig. 5).

The turbine centrifugal wheel 8 is also provided with profile blades having a centerline curved at the angle

$$\varphi_T^\circ = 180^\circ + \Delta_T^\circ - (\beta_{1T}^\circ + \beta_{2T}^\circ) = 110^\circ - 120^\circ,$$

wherein

$$\Delta_T^\circ$$

is a radial angle between the leading and trailing edges of the blades;

$$\beta_{1T}^\circ$$

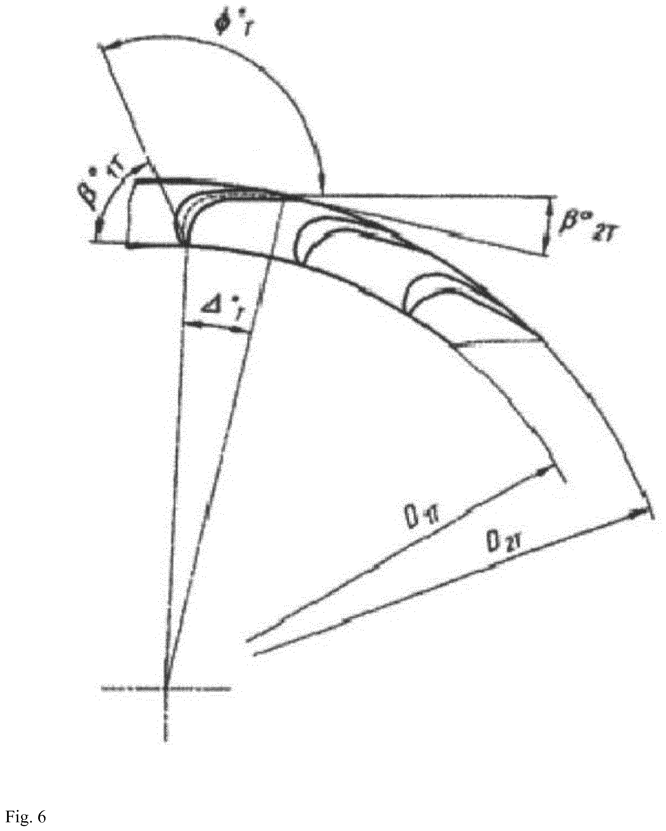

is an angle of positioning of the profile centerline at the inlet diameter of the turbine wheel, and

$$\beta_{2T}^\circ$$

is an angle of positioning of the profile centerline at the output diameter of the turbine wheel. Whereas, the ratio between the outer diameter of the wheel 8 and the inlet diameter of the blades 26 thereof is equal to: $D_{2T}/D_{1T} = 1.1\text{-}1.3$ (Fig. 6).

The abovementioned implementation aspects of the pump and turbine wheels were obtained experimentally.

The use of the working blades 26 and 27 of the pump and turbine wheels with the proposed turn of their chords, as well as with the bladeless channel 25 provided at the entrance to the blades 26 of the turbine provides the achievement of exceptionally high efficiency of the hydraulic torque converter reaching 92-93% at the transmission ratio of turbine rotational speed $n_T$ and pump rotational speed $n_P$ equal to: $n_T/n_P = 0.95\text{-}1.0$.

In hydraulic torque converter 5 the unit 11 for rotating reactor variable blades 10 in the predefined fixed position may be a spring-loaded piston having a working cavity connected to the pressure fluid feeding pump 15 via channels. The reactor variable blades 10 may be located in at least three fixed positions: with a completely open flow area of the flow path 9 (a working mode of the hydraulic torque converter 5 with maximum transmission of engine power and efficiency); with a completely closed flow area of the flow path 9 (a working mode of the hydraulic torque converter 5 with zero transmission of engine power and with a dry internal cavity of the flow path for reducing mechanical losses during rotation of the wheels); with a partially (20%) closed flow area of the flow path 9 (a working mode of the hydraulic torque converter 5 with transmission of engine power of 20-25% less than maximum value and the efficiency at 85-86%). Said three fixed positions of variable blades allow performing modes of 2 steps of engine power transmission with different speed transmission ratio in AGB during operation of a single hydraulic torque converter 5.

The single AGB electro-hydraulic gear shift unit 12 provides gear shifting and control of units 11 for rotating reactor variable blades 10 connected to the pressure fluid feeding pump 15 via channels and connected to internal cavities of flow paths 9 of the hydraulic torque converter 5 of each gear step via channels 13. Depending on the vehicle driving speed and the operational mode of the engine the unit 12 connects the pump 15 to the flow path 9 and the unit 11 for rotating reactor variable blades in one operating hydraulic torque converter 5 simultaneously disconnecting the feeding pump 15 from flow paths 9 of other hydraulic torque converters 5 (other gear steps), wherein a closed position of the reactor blades is fixed.

The internal cavities of flow paths 9 of all hydraulic torque converters used in the AGB are connected to the air cavity of the pressure fluid container 14 along the outer diameter thereof via channels 16 also being connected to the intake pipe of the air exhaust pump 17 for exhausting the air from the air cavity of the container 14 to the atmospheric environment. The driving of the pump 17 is carried out by the engine shaft 1 or by the autonomous electric motor 19. Thereby, in the hydraulic torque converters 5 disconnected by the electro-hydraulic gear shift unit 12, the rotation of the pump and turbine wheels 6 and 8 in flow paths 9 due to exhausting the air by the pump 17 is performed at lower pressures and lesser hydromechanical losses. Such losses if necessary may be further decreased by using a free wheeling clutch providing only one-way transmission of torque moment in the gear reducer extending from the turbine shaft 7.

Industrial applicability

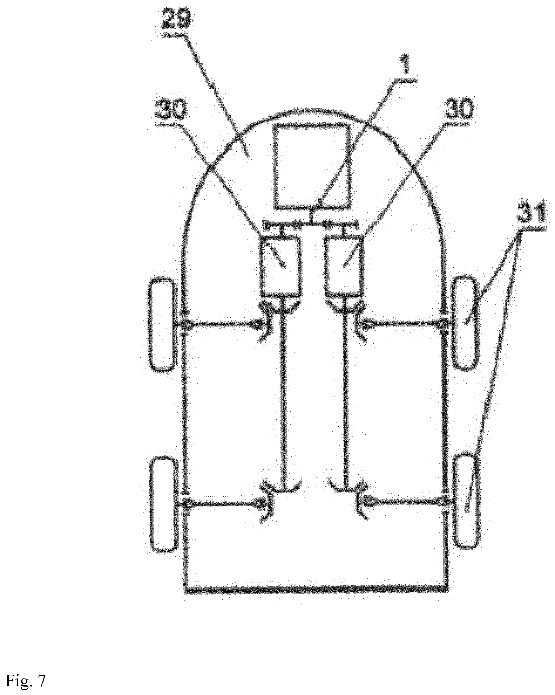

The implementation scheme and structure of the abovementioned automatic gearbox 30 transmitting rotational speed and torque moment from vehicle engine has a small weight and reduced diametric and axial dimensions. It allows positioning on one vehicle 29 several such gearboxes 30, each of which provides change of speed for one or several movers 31 in the form of wheels, screw, tracks etc. For example, as shown in Fig. 7, two gearboxes 30 can be mounted on one vehicle, each of which is connected to movers 31 located at one side of the vehicle longitudinal axis. This allows the vehicle to turn by changing the speed on its movers on one side of the vehicle as compared to the movers on the other side. The vehicle is able to perform maneuvers previously impossible, for example, such as a sharp turn on a dime.

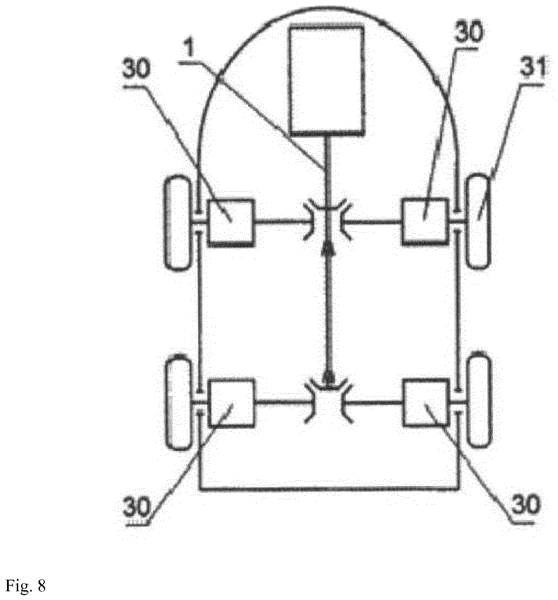

As shown in Fig. 8, a vehicle may have as many gearboxes 30, as many movers 31 it has. In this case, each gearbox 30 shifts gears for one of the movers. All gearboxes 30 are controlled by one shift unit.

The suggested scheme of the vehicle allows using movers thereof with different velocity ratios providing significant increasing of maneuverability thereof and providing high stability of the entire vehicle. Moreover, such scheme allows activating the reverse of the wheels at a high speed, thus proving a hydraulic braking.

The aspects of the provided technical solution open up new horizons for creating vehicles of new generations.

## Claims

1.    A hydromechanical automatic gearbox (30), comprising an input shaft (4) extending from an engine and a gearing extending from the input shaft (4) to each gear step, wherein the gearing is formed as a central gear (2) located on the input shaft (4) and gear wheels (3) of different gear steps meshing with the central gear (2), each of the gear wheels (3) is mounted on the input shaft (4) of at least one hydraulic torque converter (5) with centrifugal wheels of a pump and a turbine located accordingly on input shaft (4) and output shaft (7) thereof forming a flow path (9) of pressure fluid, and with reactor blades (10) located in the flow path (9) of pressure fluid, wherein step-down gears connected to a gear reducer (24), which is common for all hydraulic torque converters (5) mounted on the gearbox output shaft (7), are located on the output shafts (7) of the hydraulic torque converters (5), and each of the hydraulic torque converters (5) is electronically and hydraulically linked to the gear shift unit of the vehicle (29), **characterized in that** the transmission ratio between the central gear (2), located on the input shaft (4), and a top gear meshing with the central gear (2) corresponds to the following ratio:

$$n_P^{max}/n_{En}^{max} \geq 0.62 \sqrt[3]{N_{En}^{max}},$$

wherein

$$n_P^{max}$$

is a maximum rotational speed of the hydraulic torque converter (5) input shaft (4) working at the gear step;

$$n_{En}^{max}$$

is a maximum rotational speed of the engine shaft (1),

$$N_{En}^{max}$$

is a maximum engine capacity in kilowatts, wherein the pump centrifugal wheel (6) in hydraulic torque converters (5) comprises profile blades (27) where the centerline of the profile thereof is curved at 122°-135°, and the ratio between the value $D_{2P}$ of the outer diameter of the pump centrifugal wheel (6) and the value $D_{1P}$ of the inlet diameter of the profile blades (27) thereof is: $D_{2P}/D_{1P}$=1.4-1.9, and the turbine centrifugal wheel (8) comprises profile blades, where the centerline of the profile thereof is curved at 110°-120°, and the ratio between the value $D_{2T}$ of the outer diameter of the turbine centrifugal wheel (8), and the value $D_{1T}$ of the inlet diameter of the profile blades (26) thereof is: $D_{2T}/D_{1T}$=1.1-1.3, wherein the turbine centrifugal wheel (8) of the hydraulic torque converter (5) is made with a bladeless conduit (25) formed by centrifugal wheel discs of the turbine in front of profile blades (26) thereof and having a diameter extension equal to the ratio: $D_{1T}/D_{2P}$=1.15-1.4.

2. The automatic gearbox (30) according to claim 1, **characterized in that** reactor blades (10) are configured to be variable and fixed in a completely open, partially open or completely closed position.

3. A vehicle (29), comprising an engine, movers (31), a feeding pump (15), which feeds pressure fluid from a pressure fluid container (14), and a unit for automatic gear shift from the engine to the movers (31), the unit being connected to the feeding pump (15), which feeds pressure fluid, **characterized in that** it comprises several identical hydromechanical automatic gearboxes (30) according to claim 1, each of which is connected by the output shaft (7) thereof to the mover (31) corresponding to the output shaft (7), wherein the vehicle (29) comprises an air exhaust pump (17) connected with the air cavity in the pressure fluid container (14), wherein the flow path (9) of pressure fluid of hydraulic torque converter (5) is connected in each gearbox (30) to the air cavity in the pressure fluid container (14).

4. The vehicle (29) according to claim 3, **characterized in that** it comprises two hydromechanical automatic gearboxes (30), each of which is connected with movers (31) located at one side of the vehicle (29) longitudinal axis.

5. The vehicle (29) according to claim 3, **characterized in that** it comprises as many automatic gearboxes (30), as many movers (31) of the vehicle (29) it has, wherein each of the gearboxes (30) is arranged on the mover (31) corresponding thereto.

**Patentansprüche**

1. Ein hydromechanisches automatisches Schaltgetriebe (30), umfassend eine Eingangswelle (4), die sich von einem Motor erstreckt, und ein Getriebe, das sich von der Eingangswelle (4) zu jeder Gangstufe erstreckt, wobei das Getriebe als auf der Eingangswelle (4) angeordnetes Mittenrad (2) und Zahnräder (3) von verschiedenen Gangstufen, die mit dem Mittenrad (2) eingreifen, gebildet ist, wobei jeder von den Zahnrädern (3) auf der Eingangswelle (4) von mindestens einem hydraulischen Drehmomentwandler (5) montiert ist, wobei die Fliehkrafträder einer Pumpe und einer Turbine, die entsprechend auf der Eingangswelle (4) und Ausgangswelle (7) davon angeordnet sind, bilden einen Strömungsweg (9) von Druckflüssigkeit, und wobei Reaktorschaufeln (10) in dem Warmluftströmung (9) von Druckflüssigkeit angeordnet sind, wobei Untersetzungsgetriebe, die mit einem Getriebekasten (24) verbunden sind, der für alle auf der Getriebeausgangswelle (7) montierten hydraulischen Drehmomentwandler (5) allgemein ist, auf den Ausgangswellen (7) der hydraulischen Drehmomentwandler (5) angeordnet sind, und jeder der hydraulischen Drehmomentwandler (5) elektronisch und hydraulisch mit der Einheit für Getriebeschaltung des Fahrzeugs (29) verbunden ist, **dadurch gekennzeichnet, dass** die Raderübersetzung zwischen dem Mittenrad (2), der auf der Eingangswelle (4) angeordnet ist, und einem mit dem Mittenrad (2) eingreifenden oberen Rad dem folgenden Verhältnis entspricht:

$$\frac{n_P^{max}}{n_{EN}^{max}} \geq 0,62\sqrt[a]{n_{EN}^{max}}, \quad \grave{}$$

wobei

$$n_P^{max}$$

eine maximale Drehzahl der Eingangswelle (4) des hydraulischen Drehmomentwandlers (5) ist, die in der Getriebestufe arbeitet,

$$n_{EN}^{max}$$

eine maximale Drehzahl der Motorwelle (1) ist,

$$n_{EN}^{max}$$

eine maximale Motorleistung in Kilowatt ist, wobei das Pumpenfliehkraftrad (6) in hydraulischen Drehmomentwandlern (5) Profilschaufeln (27) aufweist, wobei die Mittellinie des Profils davon bei 122-135° gekrümmt ist, und das Verhältnis zwischen dem Wert $D_{2P}$ des Außendurchmessers des Pumpenfliehkraftrades (6) und dem Wert $D_{1P}$ des Eintrittsdurchmessers der Profilschaufel (27) davon ist: $D_{2P}/D_{1P}$=1,4-1,9, und der Fliehkraftrad der Turbine (8) Profilschaufeln aufweist, wobei die Mittellinie des Profils davon bei 110-120° gekrümmt ist, und das Verhältnis zwischen dem Wert $D_{2T}$ des Außendurchmessers des Fliehkraftrads der Turbine (8) und dem Wert $D_{1T}$ des Eintrittsdurchmessers der Profilschaufel (26) davon ist: $D_{2T}/D_{1T}$=1,1-1,3, wobei der Fliehkraftrad der Turbine (8) des hydraulischen Drehmomentwandlers (5) mit einer schaufellosen Leitung (25) gemacht ist, die durch die Scheiben der Fliehkrafträder der Turbine vor der Profilschaufeln (26) davon gebildet ist und eine Durchmesserverlängerung gleich dem Verhältnis $D_{1T}/D_{2P}$=1,15-1,4 hat.

2. Das automatische Schaltgetriebe (30) nach Anspruch 1, **dadurch gekennzeichnet, dass** die Reaktorschaufeln (10) in einer vollständig offenen, teilweise offenen oder vollständig geschlossenen Position veränderbar und feststehend ausgebildet sind.

3. Ein Fahrzeug (29), umfassend einen Motor, Verschiebegeräte (31), eine Füllpumpe (15), die Druckflüssigkeit aus einem Druckflüssigkeitsbehälter (14) fördert, und eine Einheit für automatische Getriebeschaltung vom Motor zu den Verschiebegeräten (31), wobei die Einheit mit der Füllpumpe (15) verbunden ist, die Druckflüssigkeit fördert, **dadurch gekennzeichnet, dass** es mehrere identische hydromechanische automatische Schaltgetriebe (30) nach Anspruch 1 aufweist, wobei jedes von ihnen durch die Ausgangswelle (7) davon mit dem Verschiebegerät (31) verbunden ist, das der Ausgangswelle (7) entspricht, wobei das Fahrzeug (29) eine mit dem Luftraum im Druckflüssigkeitsbehälter (14) verbundene Luftabzugspumpe (17) aufweist, wobei der Strömungsweg (9) von Druckflüssigkeit des hydraulischen Drehmomentwandlers (5) in jedem Schaltgetriebe (30) mit dem Luftraum im Druckflüssigkeitsbehälter (14) verbunden ist.

4. Das Fahrzeug (29) nach Anspruch 3, **dadurch gekennzeichnet, dass** es zwei hydromechanische automatische Schaltgetriebe (30) aufweist, wobei jedes von ihnen mit dem auf einer Seite der Längsachse des Fahrzeugs (29) angeordneten Verschiebegerät (31) verbunden ist.

5. Das Fahrzeug (29) nach Anspruch 3, **dadurch gekennzeichnet, dass** es so viele automatische Schaltgetriebe (30) aufweist, wie es Verschiebegeräte (31) des Fahrzeugs (29) hat, wobei jedes der Schaltgetriebe (30) an dem dazu korrespondierenden Verschiebegerät (31) angeordnet ist.

**Revendications**

1. Une boîte (30) de vitesses hydromécanique automatique, comprenant un arbre (4) d'entrée s'étendant d'un moteur et un engrenage s'étendant de l'arbre (4) d'entrée à chaque rapport d'engrenage, dans lequel l'engrenage est formé comme un engrenage (2) central situé sur l'arbre (4) d'entrée et roues (3) dentées de différents rapports d'engrenage engageant l'engrenage (2) central, chacune des roues (3) dentées est montée sur l'arbre (4) d'entrée d'au moins un convertisseur (5) de couple hydraulique avec des roues centrifuges d'une pompe et une turbine situées en conséquence sur l'arbre (4) d'entrée et l'arbre (7) de sortie celui-ci formant un chemin (9) d'écoulement de fluide sous pression, et avec des aubes (10) de réacteur situées dans le chemin (9) d'écoulement de fluide sous pression, dans lequel des engrenages de réduction connectés à un réducteur (24) de vitesse, qui est commun à tous les convertisseurs (5) de couple hydrauliques montés sur l'arbre (7) de sortie de la boîte de vitesses, sont situés sur les arbres (7) de sortie des convertisseurs (5) de couple hydrauliques, et chacun des convertisseurs (5) de couple hydrauliques est relié électroniquement et hydrauliquement à l'unité de changement de vitesse du véhicule (29), **caractérisé en ce que** le ratio de transmission entre l'engrenage (2) central, situé sur l'arbre (4) d'entrée, et l'engrenage supérieur engageant l'engrenage (2) central correspond au ratio suivant: $\dfrac{n_P^{max}}{n_{EN}^{max}} \geq 0,62\sqrt[3]{N_{EN}^{max}}$ ,

où $n_P^{max}$ est une vitesse de rotation maximale de l'arbre (4) d'entrée du convertisseur (5) de couple hydraulique fonctionnant au rapport d'engrenage; est une vitesse de rotation maximale de l'arbre (1) moteur, $N_{EN}^{max}$ est une capacité maximale du moteur en kilowatts, dans lequel la roue (6) centrifuge de pompe dans les convertisseurs (5) de couple hydrauliques comprend des aubes (27) profilées où la ligne médiane de son profil est incurvée à 122°-135°, et le ratio entre la valeur $D_{2P}$ du diamètre extérieur de la roue (6) centrifuge de pompe et la valeur $D_{1P}$ du diamètre d'entrée des aubes (27) profilées de celle-ci est: $D_{2P}/D_{1P}$=1.4-1.9, et la roue (8) centrifuge de turbine comprend des aubes profilées, où la ligne médiane de son profil est incurvée à 110°-120°, et le ratio entre la valeur $D_{2T}$ du diamètre extérieur de la roue (8) centrifuge de turbine, et la valeur $D_{1T}$ du diamètre d'entrée des aubes (26) profilées de celle-ci est: $D_{2T}/D_{1T}$=1.1-1.3, où la roue (8) centrifuge de turbine du convertisseur (5) de couple hydraulique est réalisée avec un conduit (25) sans aubes formé par des disques de roue centrifuge de la turbine devant ses aubes (26) profilées et ayant une extension de diamètre égale au ratio: $D_{1T}/D_{2P}$=1.15-1.4.

2. La boîte (30) de vitesses automatique selon la revendication 1, **caractérisée en ce que** les aubes (10) de réacteur sont configurées pour être variables et fixées dans une position complètement ouverte, partiellement ouverte ou complètement fermée.

3. Un véhicule (29), comprenant un moteur, des organes (31) d'entraînement, une pompe (15) d'alimentation, qui alimente un fluide sous pression à partir d'un réservoir (14) de fluide sous pression, et une unité de changement de vitesse automatique du moteur aux organes (31) d'entraînement, l'unité étant connectée à la pompe d'alimentation (15), qui alimente le fluide sous pression, **caractérisé en ce qu'**il comprend plusieurs boîtes (30) de vitesses hydromécaniques automatiques identiques selon la revendication 1, dont chacune est reliée par son arbre (7) de sortie à l'organe (31) d'entraînement correspondant à l'arbre (7) de sortie, cependant le véhicule (29) comprend une pompe (17) d'échappement d'air reliée à la cavité d'air dans le réservoir (14) de fluide sous pression, dans lequel le chemin (9) d'écoulement de fluide sous pression du convertisseur (5) de couple hydraulique est connecté dans chaque boîte (30) de vitesses à la cavité d'air dans le réservoir (14) de fluide sous pression.

4. Le véhicule (29) selon la revendication 3, **caractérisé en ce qu'**il comprend deux boîtes (30) de vitesses hydromécaniques automatiques, chacune étant reliée à des organes (31) d'entraînement situés d'un côté de l'axe longitudinal du véhicule (29).

5. Le véhicule (29) selon la revendication 3, **caractérisé en ce qu'**il comprend autant de boîtes (30) de vitesses automatiques, que des organes (31) d'entraînement du véhicule (29) qu'il possède, dans lequel chacune des boîtes (30) de vitesses est disposée sur l'organe (31) d'entraînement correspondant à celle-ci.

Fig. 1

Fig. 2

Fig. 3

Fig. 4

Fig. 5

Fig. 6

Fig. 7

Fig. 8

**EP 3 232 088 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5394694 A